# EUROPÄISCHE PATENTSCHRIFT

(11) **EP 4 676 788 B1**
(45) Veröffentlichungstag und Bekanntmachung des Hinweises auf die Patenterteilung: **30.09.2026**
(21) Anmeldenummer: 24707759.7
(22) Anmeldetag: 27.02.2024
(51) Int. Cl.: B60T 13/26, B60T 17/08

(54) **VERFAHREN UND REGELEINRICHTUNG ZUR BESTIMMUNG EINES BREMSZYLINDERDRUCKS IN EINEM PNEUMATISCHEN BREMSSYSTEM EINES NUTZFAHRZEUGES**
METHOD AND CONTROL DEVICE FOR DETERMINING A BRAKE CYLINDER PRESSURE IN A PNEUMATIC BRAKE SYSTEM OF A COMMERCIAL VEHICLE
PROCÉDÉ ET DISPOSITIF DE COMMANDE POUR DÉTERMINER UNE PRESSION DE CYLINDRE DE FREIN DANS UN SYSTÈME DE FREINAGE PNEUMATIQUE D'UN VÉHICULE UTILITAIRE

(30) Priorität: 03.03.2023 DE 102023105268
(43) Veröffentlichungstag der Anmeldung: 14.01.2026
(73) Patentinhaber: ZF CV Systems Global GmbH, 3006 Bern (CH)
(72) Erfinder: PRACHT, Joachim, 30629 Hannover (DE); BROCKMEYER, Ulrich, 31028 Gronau OT Banteln (DE)
(74) Vertreter: Rabe, Dirk-Heinrich
(86) Internationale Anmeldenummer: PCT/EP2024/054883
(87) Internationale Veröffentlichungsnummer: WO 2024/184120

(56) Entgegenhaltungen:
- CN-A- 113 688 584
- US-B1- 6 508 522

## Beschreibung

Die Erfindung betrifft ein Verfahren zur Bestimmung eines Bremszylinderdrucks in einem pneumatischen Bremssystem eines Nutzfahrzeuges, bei welchem der Bremszylinderdruck mittels eines mathematischen Modells geschätzt wird, sowie eine Regeleinrichtung zur Durchführung des Verfahrens.

Die US 6 508 522 B1 offenbart ein Verfahren und eine Vorrichtung zum Schätzen eines Bremsdrucks in einem Bremszylinder anhand eines vereinfachten mathematischen Modells. Das mathematische Modell beschränkt sich auf Betriebsbedingungen des Bremszylinders und verzichtet auf Terme höherer Ordnung und auf bestimmte fluidabhängige Terme. Der Bremsdruck im Bremszylinder wird als Funktion der Verschiebung des Zylinderkolbens geschätzt, während der Kolben in Kontakt mit dem Rotor einer Scheibenbremse zum Halten des Bremsklotzes steht.

Aus der US 2005/ 0137773 A1 ist ein Fahrzeugbremssystem zum Liefern von Druckluft zu einer Bremskammer bekannt. Um eine gewünschte Bremsreaktion zu erreichen, enthält es ein luftdruckgesteuertes Relaisventil zum Zuführen der Druckluft zur Bremskammer. Eine Zylinderspule empfängt ein variables von einem Steuereingangsdruck abhängiges Signal und liefert diesen Steuereingangsdruck an das Relaisventil als eine Funktion des Zustandes der Zylinderspule. Ein Steuergerät steuert die Zylinderspule gemäß einem Steuerungsmodell zum Liefern der Druckluft zur Bremskammer und zum Erreichen des gewünschten Bremsverhaltens.

Die DE 10 2016 213 645 A1 beschreibt ein Verfahren zum Betreiben einer automatisierten Feststellbremse, bei welchem eine Ermittlung und /oder Einstellung eines Druckniveaus mittels eines Algorithmus zur Druckschätzung erfolgt.

Aus der CN 113688584 A ist ein Verfahren zur Schätzung eines Bremskammerdrucks in einem Fahrzeug bekannt. Die Kammerdruckschätzung erfolgt mittels eines statistischen Modells, bei welchem ein Trägheitsverbindungsdruck mit variabler Zeitkonstante unter Verwendung der Zeit geschätzt wird.

Es ist Aufgabe der Erfindung, ein Verfahren und eine Vorrichtung anzugeben, mit welchen der Bremskammerdruck zuverlässig ohne Verwendung eines Drucksensors ermittelt werden kann.

Diese Aufgabe wird durch ein Verfahren nach Anspruch 1 gelöst. Danach wird zur Bestimmung eines Bremszylinderdrucks in einem pneumatischen Bremssystem eines Nutzfahrzeuges, bei welchem der Bremszylinderdruck mittels eines mathematischen Modells geschätzt wird, dieser in Abhängigkeit eines Luftmassenstromes, der durch einen Öffnungs- bzw. Schließzustand eines außerhalb einer Regeleinrichtung für den Bremszylinderdruck in einer Luftzuführung unmittelbar vor einem Bremszylinder angeordneten elektronisch steuerbaren Magnetventils eingestellt wird, und den physikalischen Eigenschaften der Luft in der Kammer des Bremszylinders kontinuierlich unter Berücksichtigung des aktuell vorgegebenen Öffnungs- oder Schließzustandes des Magnetventils bestimmt wird.

Die Aufgabe ist auch gelöst durch eine Regeleinrichtung zur Bestimmung eines Bremszylinderdrucks in einem pneumatischen Bremssystem eines Nutzfahrzeuges, welche die über eine Luftzuführung in einen Bremszylinder einströmende Luft reguliert, wobei in der Luftzuführung zum Bremszylinder ein elektronisch steuerbares Magnetventil angeordnet und mit einer Recheneinheit verbunden ist, welche den Bremszylinderdruck in Abhängigkeit mindestens eines Merkmals des in dieser Schutzrechtanmeldung vorgeschlagenen Verfahrens ermittelt.

Unter dem Luftmassenstrom soll im weiteren die Ableitung der durch das Magnetventil strömenden Luftmasse nach der Zeit verstanden werden. Da die Verwendung des durch das separate in einer Luftzuführungsleitung angeordnete Magnetventil eine direkte Druckmessung durch die den Bremsdruck regelnden Regeleinrichtung verhindert, wird ein Echtzeitschätzer für den tatsächlichen Bremszylinderdruck verwendet, der auf vereinfachten Gleichungen der Fluiddynamik und der Thermodynamik basiert, um Rechenzeit zu sparen. Dabei wird das Verhalten des Magnetventils und des Bremszylinders experimentell abgeleitet. Insbesondere werden die Totzeiten zwischen Bestromung und pneumatischem Öffnen und Schließen des Magnetventils berücksichtigt, was die Genauigkeit der Echtzeitschätzung erhöht. Die Totzeiten werden ebenfalls messtechnisch abgeleitet.

Eine solche Echtzeitschätzung eignet sich insbesondere für Fahrdynamikregelfunktionen, die ein Magnetventil verwenden und in den Bremsregelvorgang eingreifen. Eine solche Fahrdynamikregelung stellt beispielsweise ein ABS-System dar, welches ein ABS-Ventil zur Verhinderung des Blockierens der Fahrzeugräder bei einer Vollbremsung umfasst. Die Informationen über das Druckniveau im Bremszylinder sind besonders bei Funktionsübergängen (beispielsweise beim Übergang von der normalen Bremsregelung zum Eingreifen des ABS-Systems) von besonderer Bedeutung. Sie können aber auch zur Funktionsoptimierung genutzt werden.

In einer bevorzugten Ausführungsform wird der Bremszylinderdruck basierend auf einer "upstream" - Temperatur und "up- und downstream" Drücken dreier Luftmassen-Teilströme berechnet, wobei der erste Teilstrom von der Regeleinrichtung zu dem Bremszylinder, der zweite Teilstrom zurück vom Bremszylinder zur Regeleinrichtung und der dritte Teilstrom vom Bremszylinder in die Umgebung des Bremssystems strömend betrachtet wird. Die Betrachtung der Eigenschaften der Teilströme der Luftmasse, die in verschiedene Richtungen strömen, ermöglicht eine Erhöhung der Genauigkeit des in Echtzeit zu bestimmenden Bremszylinderdrucks.

In einer weiteren bevorzugten Ausführungsform werden die Luftmassen-Teilströme in Abhängigkeit der stromaufwärts und stromabwärts des Magnetventils vorliegenden Drücke und der stromaufwärts des Magnetventils vorliegenden Luft-Temperatur ermittelt, aus welchen gemeinsam mit den physikalischen Eigenschaften der Luft in der Kammer des Bremszylinders zum Zeitpunkt des vorgegebenen Öffnungs- oder Schließzustandes der Bremszylinderdruck ermittelt wird. Die Ermittlung der Drücke und der Luft-Temperatur lässt sich messtechnisch mit einfachen Mittels realisieren, was des messtechnischen Aufwand für die Schätzung vereinfacht.

In einer weiteren Ausführungsform werden als physikalische Eigenschaften der Luft in der Kammer des Bremszylinders deren Temperatur und deren Volumen berechnet. Dies ist mit einfachen thermodynamischen Gleichungen realisierbar. Das Volumen der Luft in der Kammer des Bremszylinders lässt sich besonders komfortabel in Abhängigkeit eines den Bremszylinderdruck charakterisierenden Verschiebungsweges eines Kolbens des Bremszylinders in der Kammer des Bremszylinders ermitteln. Dazu muss lediglich ein von dem Kolben des Bremszylinders zurückgelegter Weg mit einem an sich vorhandenen Wegsensor bestimmt werden.

In einer weiteren bevorzugten Ausführungsform wird die Temperatur der Luft in der Kammer des Bremszylinders in Abhängigkeit eines Enthalpiestromes und/oder eines Wärmemengenflusses zwischen der Luft in der Kammer des Bremszylinders und der Umgebung und/oder einer Volumenänderungsarbeit ermittelt. Im geöffneten Zustand des Magnetventils wird außerdem eine vorgegebene Querschnittsfläche in der Luftzuführleitung angenommen, über die der Luftmassenstrom fließt, während bei geschlossenem Zustand des Magnetventils eine Querschnittsfläche von Null festgelegt wird. Durch die zwei festgelegten Querschnittsflächen in der Luftzuführung wird einerseits der Messaufwand reduziert, andererseits der Rechenaufwand verringert, da nur mit zwei festen Größen kalkuliert werden muss, die den offenen oder geschlossenen Zustand des Magnetventils repräsentieren.

In einer weiteren bevorzugten Ausführung ist in der Luftzuführleitung zum Bremszylinder ein elektronisch steuerbares Magnetventil angeordnet, dass mit einer Recheneinheit verbunden ist, die Bestandteil der Regeleinrichtung zur Bestimmung eines Bremszylinderdrucks in einem pneumatischen Bremssystem eines Nutzfahrzeuges ist. Die Regeleinrichtung umfasst einen Drucksensor zur Erfassung eines Vordrucks am Magnetventil, welcher zur Bestimmung der ersten Teilstromes des Luftmassenstromes berücksichtigt wird, der von der Regeleinrichtung zu dem Bremszylinder strömt.

In einer weiteren bevorzugten Ausführung ist das elektrisch steuerbare Magnetventil als ein an einem Fahrzeugrad montiertes ABS-Ventil ausgebildet, welches von einem ABS-Steuergerät gesteuert wird. Dabei ist die Regeleinrichtung derart ausgebildet, den Bremszylinderdruck auf beiden Seiten einer Achse eines Fahrzeuges zu regeln, wodurch Hardware-Aufwand verringert wird. Eine solche Regeleinrichtung wird auch als Achsmodulator bezeichnet. Er verfügt über zwei pneumatisch unabhängige Druckregelkanäle mit jeweils einem Belüftungs- und Entlüftungsventil, jeweils einem Drucksensor und der gemeinsamen als Recheneinheit genutzten Regelelektronik.

Die hier in Bezug auf das Verfahren beschriebenen Aspekte treffen gleichermaßen auf die offenbarte Vorrichtung zu. Das offenbarte Verfahren kann dabei beispielsweise von der Recheneinheit ausgeführt werden. Dies kann unter der Vornahme geeigneter Schreib- und Lesezugriffe auf einen dem Fahrzeug zugeordneten Speicher erfolgen. Das Verfahren ist insbesondere innerhalb des Kraftfahrzeuges in Hardware oder Software oder auch einer Kombination aus Hard- und Software implementiert. Die Hardware umfasst insbesondere digitale Signalprozessoren, anwendungsspezifische integrierte Schaltkreise, Field Programmable Gate Arrays sowie weitere geeignete Schalt- und Rechenkomponenten.

Weitere Merkmale, Vorteile und Eigenschaften der Erfindung werden anhand der Beschreibung bevorzugter Ausführungen der Erfindung unter Verweis auf die Figuren erklärt, die zeigen:
- Fig. 1: eine Prinzipdarstellung eines Ausführungsbeispiels der erfindungsgemäßen Vorrichtung für ein pneumatisches Bremssystem an einer Frontachse eines Fahrzeuges,
- Fig. 2: eine schematische Darstellung der Teilströme der Luftmasse in einem Druckregelstand der Vorrichtung gemäß Fig. 1,
- Fig. 3: eine schematische Darstellung eines Ausführungsbeispiels des erfindungsgemäßen Verfahrens.

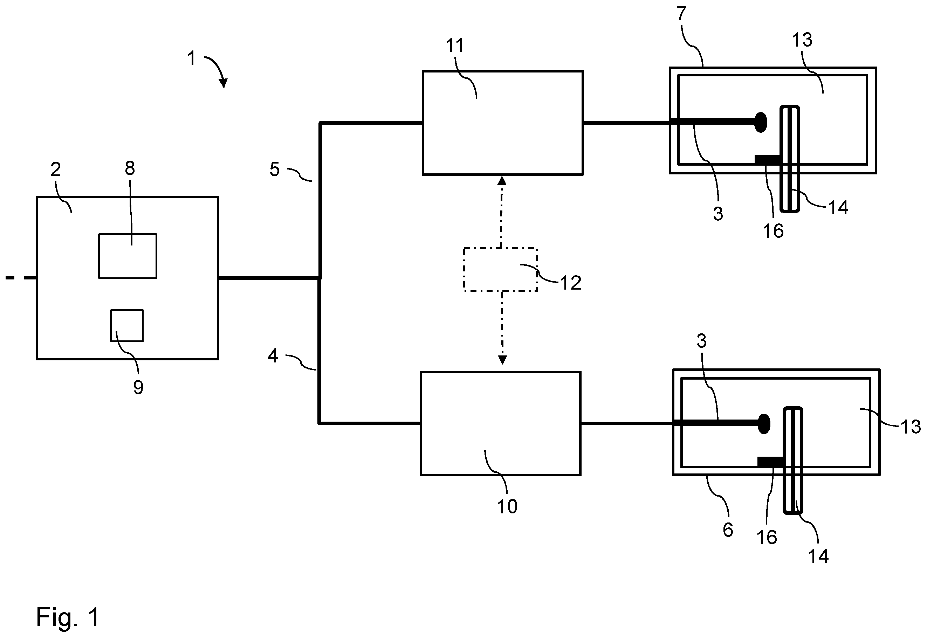

In Fig. 1 ist eine Prinzipdarstellung eines Ausführungsbeispiels der erfindungsgemäßen Vorrichtung für ein pneumatisches Bremssystem einer Vorderachse eines Fahrzeuges dargestellt. Die Vorrichtung 1 ist als Achsmodulator 2 ausgebildet, welcher als Regeleinrichtung für einen Bremszylinderdruck in einem Bremszylinder 6, 7 einer pneumatischen Bremsanlage fungiert. Bei einer solchen pneumatischen Bremsanlage wird der durch eine Betriebsbremse 14, die als Scheibenbremse ausgebildet sein kann, ausgeführte Bremsvorgang des Fahrzeuges unterstützt, indem ein Kolben 3 des Bremszylinders 6, 7 durch die eingeführte Druckluft gegen die an jeden Fahrzeugrad angeordnete Betriebsbremse gedrückt wird.

Der Achsmodulator 2 ist über Luftzuführleitungen 4, 5 mit einem rechten und einem linken Bremszylinder 6, 7 verbunden, über welche der Achsmodulator 2 die Luft in die beiden Bremszylinder 6, 7 einspeist, um einen Bremsvorgang an den Rädern der Vorderachse des Fahrzeuges zu unterstützen. Jede Luftzuführleitung 4, 5 bildet mit einem Bremszylinder 6, 7 einen separaten Druckregelstrang. Der Achsmodulator 2 umfasst eine Regelelektronik 8 zur Bestimmung der für den jeweiligen Bremszylinder 6, 7 vorgesehenen Luftzufuhr und einen Drucksensor 9 zur Bestimmung des Drucks in den Luftzuführleitungen 4, 5. Direkt vor dem jeweiligen Bremszylinder 6, 7 ist in der jeweiligen Luftzuführleitung 4, 5 jeweils ein ABS-Ventil 10, 11 verbaut, welches in seinem Öffnung- oder Schließzustand von einem ABS-Steuergerät 12 gesteuert wird. Das ABS-Steuergerät 12 verhindert, dass die Räder des Fahrzeuges bei einer Vollbremsung blockieren und der Fahrer des Fahrzeuges so die Kontrolle über das Fahrzeug verliert. Dies gelinkt durch das wiederholte Absenken und Wiederanheben des Bremsdruckes mit den elektronisch gesteuerten ABS-Ventilen 10, 11. Durch eine Veränderung des Öffnungszustandes der ABS-Ventile werden die Räder dosiert eingebremst.

Der Achsmodulator 2, wie er an der Vorderachse verbaut ist, hat nur einen Drucksensor 9 und kann daher nur einen Druck aussteuern. Dieser Druck liegt an der Vorderachse an beiden Rädern an, welche dadurch mit dem gleichen Druck beaufschlagt werden. Da jedes Vorderrad ein eigenes ABS-Ventil 10, 11 besitzt, können die Raddrücke darüber wieder radindividuell moduliert werden, ohne dass ein Drucksensor die vom ABS-Ventil 10, 11 modulierten Drücke messen kann. Ein im weiteren beschriebener Echtzeitschätzer kann immer dann eingesetzt werden, wenn zwischen dem Achsmodulator 2 und dem Rad ein ABS-Ventil 10, 11 sitzt, da das Betätigen des ABS-Ventils 10, 11 dazu führt, dass der gemessene Druck am Achsmodulator 2 nicht mehr mit den Raddrücken übereinstimmt.

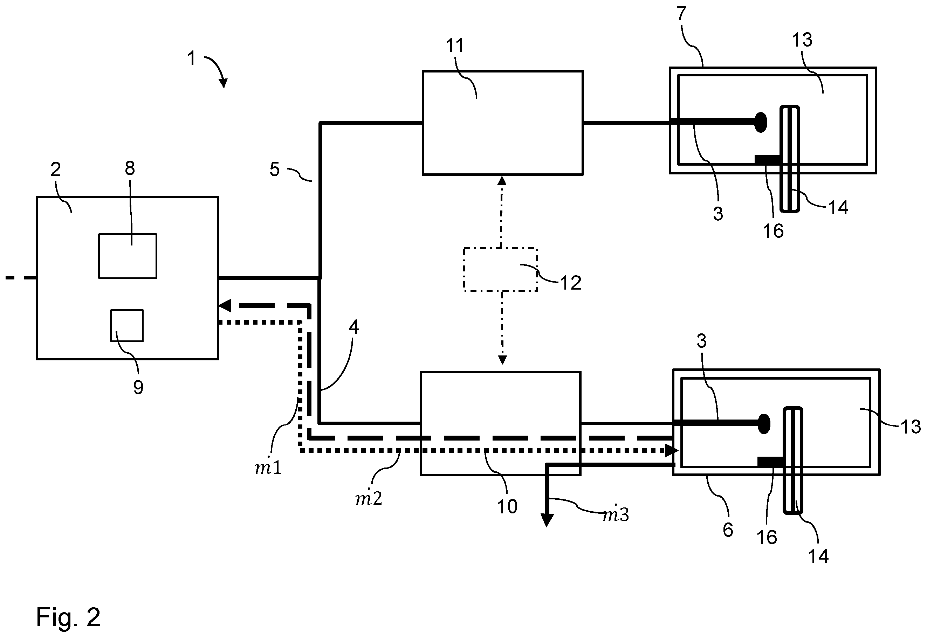

Da während der Betätigung der ABS-Ventile 10, 11 der Bremszylinderdruck p_{BrkCyl} in den Bremszylindern 6, 7 durch den Drucksensor 9 des Achsmodulators 2 nicht bestimmt werden kann, wird dieser in Abhängigkeit eines durch ein ABS-Ventil 10, 11 strömenden Luftmassenstrom m geschätzt. Wie aus Fig. 2 ersichtlich, besteht der Luftmassenstrom m in einem Druckregelstrang aus drei Teilströmen ṁ1, ṁ2, und ṁ3. Der erste Teilstrom ṁ1 fließt von dem Achsmodulator 2 durch das ABS-Ventil 10 zum Bremszylinder 6, während der zweite Teilstrom ṁ2 vom Bremszylinder 6 durch das ABS-Ventil 10 zurück zum Achsmodulator 2 strömt. Der dritte Teilstrom ṁ3 strömt aus der Kammer 13 des Bremszylinders 6 über das ABS-Ventil 10 in die Umgebung aus.

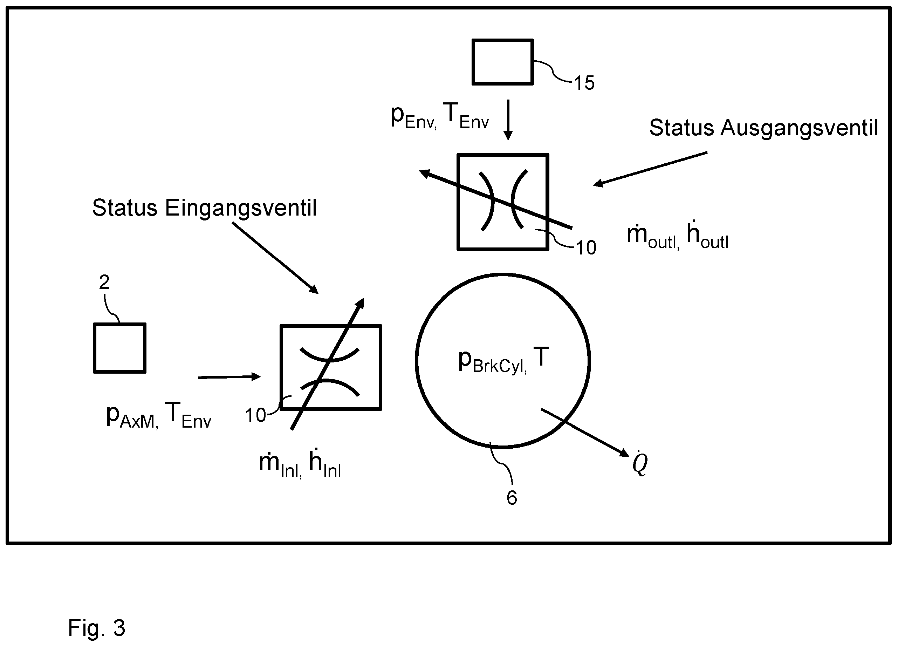

Die Schätzung des Luftmassenstroms m erfolgt anhand eines mathematischen Modells, wie es in Fig. 3 für einen Druckregelstand dargestellt ist. Das ABS-Ventil 10 wird mit einen ersten Status als Eingangsventil dargestellt, in welches ein Luftmassenstrom ṁ mit einem als Vordruck im Achsmodulator 2 durch den Drucksensor 9 gemessenen Druck p_{AxM} und einer Umgebungstemperatur T_{Env} einströmt. Des Weiteren wird das ABS-Ventil in einem zweiten Status als Ausgangsventil betrachtet. Das ABS-Ventil 10 ist in einem der Zustände geschlossen. Dabei beträgt eine Querschnittfläche A der Luftzuführleitung Null. Im geöffneten zweiten Zustand des ABS-Ventils 10 wird diese Querschnittfläche als 100 % angenommen. Weiterhin werden als dabei bei der Berechnung der eingehende Luftmassenstrom ṁₗₙₗ und dessen Enthalpiestrom ḣₗₙₗ berücksichtigt. Infolge dem in dem Bremszylinder 6 auftretenden Druck p_{BrkCyl} und der auftretenden Temperatur T ergibt sich ein zu berücksichtigender, nach außen abgegebener Wärmemengenfluss Q. Als Ausganggrößen des ABS-Ventils 10 wird ein Luftmassenstrom ṁₒᵤₜₗ mit einem weiteren Enthalpiestrom ḣₒᵤₜₗ betrachtet. Der Luftdruck p_{Env} der Umgebung und die Umgebungstemperatur T_{Env} werden als weitere Eingangsgrößen berücksichtigt.

Aus diesem Modell lässt sich der Bremskammerdruck p_{BrkCyl} in Echtzeit unter Zugrundelegung der Gleichung 1 abschätzen: ${p}_{BrkCyl} = \frac{\int \dot{m} dt \times R T}{V}$ wobei:

| | |
|---|---|
| p_{BrkCyl} | Bremszylinderdruck, |
| ṁ | Luftmassenstrom, |
| R | spezifische Gaskonstante von Luft, |
| T | Lufttemperatur im Bremszylinder |
| V | Volumen der Luft in der Kammer des Bremszylinders. |

Die einzelnen Komponenten der Gl.1 *ṁ*, T und V lassen sich wie folgt berechnen.

Das Volumen V bestimmt sich aus: $V = {A}_{BrkCyl} * x \left({p}_{BrkCyl}\right) + {V}_{tot}$ wobei:

| | |
|---|---|
| A_{BrkCyl} | Basisfläche der Bremskammer, |
| x(p_{BrkCyl}) | Verschiebung des Kolbens im Bremszylinder, |
| Vₜₒₜ | Totvolumen des Bremszylinders. |

Dabei wird die Verschiebung des Kolbens 3 des Bremszylinders 6 mittels eines Wegsensors 16 bestimmt.

Der Luftmassenstrom ṁ berechnet aus nachfolgender Gleichung: $\dot{m} = A * {C}_{q} * {C}_{m} * \frac{{p}_{up}}{\sqrt{{T}_{up}}}$ wobei:

| | |
|---|---|
| A | Querschnittsfläche der Luftführungsleitung |
| C_{q} | Flusskoeffizient (Faktor, zum Ausgleich der effektiven Fläche des Luftmassenstromes), |
| Cₘ | Flussparameter, |
| pᵤₚ | "upstream" - Druck, |
| Tᵤₚ | "upstream" - Temperatur. |

Die Temperatur T ergibt sich wie folgt: $T = \int \frac{\left(\dot{h}-\dot{Q}-pBrkCyl∗V/Cv-\left(\dot{m}∗T\right)\right.}{m}$ wobei

| | |
|---|---|
| ḣ | Enthalpiestrom |
| *Q̇* | Wärmefluss zwischen Luft im Bremskammervolumen und der Umgebung, |
| *V̇* | Volumenänderung |
| m | Luftmasse im Volumen. |

Alternativ können die Druckgradienten auch aus Erfahrung oder Experimenten abgeleitet werden.

Die beschriebene Lösung ist nicht auf die Anwendung der Räder der Vorderachse beschränkt, sondern kann auch für Hinterachsen verwendet werden, wenn eine Fahrzeug-Konfiguration den Einsatz von ABS-Ventilen an Rädern der Hinterachse erfordert.

### Bezugszeichen

- 1: Vorrichtung
- 2: Achsmodulator
- 3: Kolben des Bremszylinders
- 4: Luftzuführleitung
- 5: Luftzuführleitung
- 6: Bremszylinder
- 7: Bremszylinder
- 8: Regelelektronik
- 9: Drucksensor
- 10: ABS-Ventil
- 11: ABS-Ventil
- 12: ABS-Steuergerät
- 13: Kammer des Bremszylinders
- 14: Betriebsbremse
- 15: Umgebung
- 16: Wegsensor

## Patentansprüche

1. Verfahren zur Bestimmung eines Bremszylinderdrucks in einem pneumatischen Bremssystem eines Nutzfahrzeuges, bei welchem der Bremszylinderdruck (p_{BrkCyl}) mittels eines mathematischen Modells geschätzt wird, **dadurch gekennzeichnet, dass** der Bremszylinderdruck (p_{BrkCyl}) in Abhängigkeit eines Luftmassenstromes (m), der durch einen Öffnungs- bzw. Schließzustand eines außerhalb einer Regeleinrichtung (2) für den Bremszylinderdruck (p_{BrkCyl}) in einer Luftzuführleitung (4, 5) unmittelbar vor einem Bremszylinder (6, 7) angeordneten elektronisch steuerbaren Magnetventils (10, 11) eingestellt wird, und den physikalischen Eigenschaften der Luft in der Kammer (13) des Bremszylinder(6, 7) kontinuierlich unter Berücksichtigung des aktuell vorgegebenen Öffnungs- oder Schließzustandes des Magnetventils (10, 11) bestimmt wird.

2. Verfahren nach Anspruch 1, **dadurch gekennzeichnet, dass** das Verhalten des elektronisch gesteuerten Magnetventils (10, 11) und/oder des Bremszylinders (6, 7) messtechnisch bestimmt werden.

3. Verfahren nach Anspruch 1 oder 2, **dadurch gekennzeichnet, dass** Totzeiten zwischen Bestromung und dem pneumatischen Öffnen bzw. Schließen des elektrisch steuerbaren Magnetventils (10, 11) messtechnisch abgeleitet werden.

4. Verfahren nach Anspruch 1, 2 oder 3, **dadurch gekennzeichnet, dass** der Bremszylinderdruck (p_{BrkCyl}) basierend auf einer "upstream" - Temperatur (T) und "up- und downstream" Drücken dreier Luftmassen-Teilströme (ṁ1, ṁ2, ṁ3) berechnet wird, wobei der erste Teilstrom (ṁ1) von der Regeleinrichtung (2) zu dem Bremszylinder (6, 7), der zweite Teilstrom (ṁ2) zurück vom Bremszylinder (6, 7) zur Regeleinrichtung (2) und der dritte Teilstrom (ṁ3) vom Bremszylinder (6, 7) in die Umgebung des Bremssystems strömend betrachtet wird.

5. Verfahren nach Anspruch 4, **dadurch gekennzeichnet, dass** die Luftmassen-Teilströme (ṁ1, ṁ2, ṁ3) in Abhängigkeit der stromaufwärts und stromabwärts des Magnetventils (10, 11) vorliegenden Drücke (p) und der stromaufwärts des Magnetventils (10, 11) vorliegenden Luft-Temperatur (T) ermittelt werden, aus welchen gemeinsam mit den physikalischen Eigenschaften der Luft in der Kammer (13) des Bremszylinders (6, 7) zum Zeitpunkt des vorgegebenen Öffnungs- oder Schließzustandes der Bremszylinderdruck (p_{BrkCyl}) ermittelt wird.

6. Verfahren nach mindestens einem der vorhergehenden Ansprüche, **dadurch gekennzeichnet, dass** als physikalische Eigenschaften der Luft in der Kammer (13) des Bremszylinders (6, 7) deren Temperatur (T) und deren Volumen (V) berechnet werden.

7. Verfahren nach mindestens einem der vorhergehenden Ansprüche, **dadurch gekennzeichnet, dass** das Volumen (V) der Luft in der Kammer (13) des Bremszylinders (6, 7) in Abhängigkeit eines den Bremszylinderdruck (p_{BrkCyl}) charakterisierenden Verschiebungsweges eines Kolbens (3) in der Kammer (13) des Bremszylinders (6, 7) ermittelt wird.

8. Verfahren nach mindestens einem der vorhergehenden Ansprüche, **dadurch gekennzeichnet, dass** die Temperatur (T) der Luft in der Kammer (13) des Bremszylinders (6, 7) in Abhängigkeit einer Enthalpiestromes (h) und/oder eines Wärmemengenflusses (*Q̇*) zwischen der Luft in der Kammer (13) des Bremszylinders und der Umgebung und/oder einer Volumenänderungsarbeit ermittelt wird.

9. Verfahren nach mindestens einem der vorhergehenden Ansprüche, **dadurch gekennzeichnet, dass** im geöffneten Zustand des Magnetventils (10, 11) eine Querschnittsfläche (A) in der Luftzuführleitung (4, 5) angenommen wird, über die der Luftmassenstrom (ṁ) fließt, während bei geschlossenem Zustand des Magnetventils (10, 11) eine Querschnittsfläche (A) von Null festgelegt wird.

10. Verfahren nach mindestens einem der vorhergehenden Ansprüche, **dadurch gekennzeichnet, dass** als elektronisch steuerbares Magnetventil ein ABS-Ventil (10, 11) verwendet wird.

11. Regeleinrichtung zur Bestimmung eines Bremszylinderdrucks in einem pneumatischen Bremssystem eines Nutzfahrzeuges, welche die über eine Luftzuführleitung (4, 5) in einen Bremszylinder (6, 7) einströmende Luft reguliert, **dadurch gekennzeichnet, dass** eine Recheneinheit (8) ausgebildet ist, unter der Bedingung, dass in der Luftzuführleitung (4, 5) zum Bremszylinder (6, 7) ein elektronisch steuerbares Magnetventil (10, 11) angeordnet ist, den Bremszylinderdruck (p_{BrkCyl}) in Abhängigkeit eines der vorhergehenden Ansprüche 1 bis 10 zu ermitteln.

12. Regeleinrichtung nach Anspruch 11, **dadurch gekennzeichnet, dass** einen Drucksensor (9) zur Erfassung eines Vordrucks am Magnetventil (10, 11) vorhanden ist.

13. Regeleinrichtung nach Anspruch 11 oder 12, **dadurch gekennzeichnet, dass** die Recheneinheit (8) Bestandteil der Regeleinrichtung (2) ist.

14. Regeleinrichtung nach Anspruch 11 oder 12, **dadurch gekennzeichnet, dass** das elektrisch steuerbare Magnetventil als ein an einem Fahrzeugrad montiertes ABS-Ventil (10, 11) ausgebildet ist, welches von einem ABS-Steuergerät (12) gesteuert wird.

15. Regeleinrichtung nach Anspruch 11 bis 14, welche ausgebildet ist, den Bremszylinderdruck (p_{BrkCyl}) auf beiden Seiten einer Achse eines Fahrzeuges zu regeln.

## Claims

1. Method for determining a brake cylinder pressure in a pneumatic brake system of a commercial vehicle, in which the brake cylinder pressure (p_{BrkCyl}) is estimated using a mathematical model, **characterized in that** the brake cylinder pressure (p_{BrkCyl}) is determined continuously on the basis of an air mass flow (ṁ) which is adjusted by an open or closed state of an electronically controllable solenoid valve (10, 11) arranged outside a control device (2) for the brake cylinder pressure (p_{BrkCyl}) in an air supply line (4, 5) immediately upstream of a brake cylinder (6, 7), and the physical properties of the air in the chamber (13) of the brake cylinder (6, 7), taking into account the currently specified open or closed state of the solenoid valve (10, 11).

2. Method according to claim 1, **characterized in that** the behavior of the electronically controlled solenoid valve (10, 11) and/or the brake cylinder (6, 7) is determined by measurement.

3. Method according to claim 1 or 2, **characterized in that** dead times between energization and the pneumatic opening or closing of the electrically controllable solenoid valve (10, 11) are derived by measurement.

4. Method according to claim 1, 2 or 3, **characterized in that** the brake cylinder pressure (p_{BrkCyl}) is calculated on the basis of an "upstream" temperature (T) and "upstream and downstream" pressures of three air mass partial flows (ṁ1, ṁ2, ṁ3), the first partial flow (ṁ1) being considered to flow from the control device (2) to the brake cylinder (6, 7), the second partial flow (ṁ2) back from the brake cylinder (6, 7) to the control device (2), and the third partial flow (ṁ3) from the brake cylinder (6, 7) into the environment of the brake system.

5. Method according to claim 4, **characterized in that** the air mass partial flows (ṁ1, ṁ2, ṁ3) are ascertained on the basis of the pressures (p) present upstream and downstream of the solenoid valve (10, 11) and the air temperature (T) present upstream of the solenoid valve (10, 11), from which, together with the physical properties of the air in the chamber (13) of the brake cylinder (6, 7) at the time of the specified open or closed state, the brake cylinder pressure (p_{BrkCyl}) is ascertained.

6. Method according to at least one of the preceding claims,
**characterized in that** the temperature (T) and the volume (V) of the air are calculated as the physical properties of the air in the chamber (13) of the brake cylinder (6, 7).

7. Method according to at least one of the preceding claims,
**characterized in that** the volume (V) of the air in the chamber (13) of the brake cylinder (6, 7) is ascertained on the basis of a displacement path of a piston (3) in the chamber (13) of the brake cylinder (6, 7), which displacement path characterizes the brake cylinder pressure (p_{BrkCyl}).

8. Method according to at least one of the preceding claims,
**characterized in that** the temperature (T) of the air in the chamber (13) of the brake cylinder (6, 7) is ascertained on the basis of an enthalpy flow (ḣ) and/or a heat quantity flow (*Q̇*) between the air in the chamber (13) of the brake cylinder and the environment and/or a volume change work.

9. Method according to at least one of the preceding claims,
**characterized in that** in the open state of the solenoid valve (10, 11) a cross-sectional area (A) is assumed in the air supply line (4, 5) through which the air mass flow (ṁ) flows, while in the closed state of the solenoid valve (10, 11) a cross-sectional area (A) of zero is established.

10. Method according to at least one of the preceding claims,
**characterized in that** an ABS valve (10, 11) is used as an electronically controllable solenoid valve.

11. Control device for determining a brake cylinder pressure in a pneumatic brake system of a commercial vehicle, which device regulates the air flowing into a brake cylinder (6, 7) through an air supply line (4, 5), **characterized in that** a computing unit (8) is designed, provided that an electronically controllable solenoid valve (10, 11) is arranged in the air supply line (4, 5) to the brake cylinder (6, 7), to ascertain the brake cylinder pressure (p_{BrkCyl}) on the basis of one of the preceding claims 1 to 10.

12. Control device according to claim 11, **characterized in that** a pressure sensor (9) is present for detecting a pre-pressure at the solenoid valve (10, 11).

13. Control device according to claim 11 or 12, **characterized in that** the computing unit (8) is a component of the control device (2).

14. Control device according to claim 11 or 12, **characterized in that** the electrically controllable solenoid valve is designed as an ABS valve (10, 11) mounted on a vehicle wheel, which valve is controlled by an ABS control unit (12).

15. Control device according to claims 11 to 14, which is configured to control the brake cylinder pressure (p_{BrkCyl}) on both sides of an axle of a vehicle.

## Revendications

1. Procédé pour la détermination d'une pression de cylindre de frein dans un système de freinage pneumatique d'un véhicule utilitaire, dans lequel la pression de cylindre de frein (p_{BrkCyl}) est estimée à l'aide d'un modèle mathématique, **caractérisé en ce que** la pression de cylindre de frein (p_{BrkCyl}) est déterminée en fonction d'un débit massique d'air (ṁ) qui est réglé par un état d'ouverture ou de fermeture d'une électrovanne pouvant être commandée électroniquement (10, 11) disposée dans une conduite d'alimentation en air (4, 5) immédiatement en amont d'un cylindre de frein (6, 7), à l'extérieur d'un dispositif de régulation (2) de la pression de cylindre de frein (p_{BrkCyl}), et les propriétés physiques de l'air dans la chambre (13) du cylindre de frein (6, 7) sont déterminées en continu en tenant compte de l'état d'ouverture ou de fermeture actuellement prédéfini de l'électrovanne (10, 11).

2. Procédé selon la revendication 1, **caractérisé en ce que** le comportement de l'électrovanne pouvant être commandée électroniquement (10, 11) et/ou du cylindre de frein (6, 7) est déterminé par mesure.

3. Procédé selon la revendication 1 ou 2, **caractérisé en ce que** les temps morts entre la mise sous tension et l'ouverture ou la fermeture pneumatique de l'électrovanne pouvant être commandée électroniquement (10, 11) sont déduits par mesure.

4. Procédé selon la revendication 1, 2 ou 3, **caractérisé en ce que** la pression de cylindre de frein (p_{BrkCyl}) est calculée sur la base d'une température « en amont » (T) et de pressions « en amont et en aval » de trois flux partiels de masse d'air (ṁ1, ṁ2, ṁ3), dans lequel le premier flux partiel (ṁ1) est considéré comme s'écoulant du dispositif de régulation (2) vers le cylindre de frein (6, 7), le deuxième flux partiel (ṁ2) est considéré comme s'écoulant en revenant du cylindre de frein (6, 7) vers le dispositif de régulation (2), et le troisième flux partiel (ṁ3) est considéré comme s'écoulant du cylindre de frein (6, 7) vers l'environnement du système de freinage.

5. Procédé selon la revendication 4, **caractérisé en ce que** les flux partiels de masse d'air (ṁ1, ṁ2, ṁ3) sont spécifiés en fonction des pressions (p) présentes en amont et en aval de l'électrovanne (10, 11) et de la température de l'air (T) en amont de l'électrovanne (10, 11), à partir desquelles, conjointement avec les propriétés physiques de l'air dans la chambre (13) du cylindre de frein (6, 7) au moment de l'état d'ouverture ou de fermeture prédéfini, la pression de cylindre de frein (p_{BrkCyl}) est spécifiée.

6. Procédé selon au moins l'une des revendications précédentes,
**caractérisé en ce que** la température (T) et le volume (V) sont calculés comme propriétés physiques de l'air dans la chambre (13) du cylindre de frein (6, 7).

7. Procédé selon au moins l'une des revendications précédentes,
**caractérisé en ce que** le volume (V) de l'air dans la chambre (13) du cylindre de frein (6, 7) est spécifié en fonction d'une course de déplacement d'un piston (3) dans la chambre (13) du cylindre de frein (6, 7), laquelle course caractérise la pression de cylindre de frein (p_{BrkCyl}).

8. Procédé selon au moins l'une des revendications précédentes,
**caractérisé en ce que** la température (T) de l'air dans la chambre (13) du cylindre de frein (6, 7) est spécifiée en fonction d'un flux d'enthalpie (ḣ) et/ou d'un flux de chaleur (*Q̇* ) entre l'air dans la chambre (13) du cylindre de frein et l'environnement et/ou d'un travail de transvasement.

9. Procédé selon au moins l'une des revendications précédentes,
**caractérisé en ce que**, dans l'état ouvert de l'électrovanne (10, 11), une surface de section transversale (A) dans la conduite d'alimentation en air (4, 5) est admise, sur laquelle s'écoule le débit massique d'air (ṁ), tandis que, dans l'état fermé de l'électrovanne (10, 11), une surface de section transversale (A) égale à zéro est définie.

10. Procédé selon au moins l'une des revendications précédentes,
**caractérisé en ce qu'**une vanne ABS (10, 11) est utilisée comme électrovanne pouvant être commandée électroniquement.

11. Dispositif de régulation pour la détermination d'une pression de cylindre de frein dans un système de freinage pneumatique d'un véhicule utilitaire, lequel régule l'air s'écoulant dans un cylindre de frein (6, 7) par l'intermédiaire d'une conduite d'alimentation en air (4, 5), **caractérisé en ce qu'**une unité de calcul (8) est réalisée, à condition qu'une électrovanne pouvant être commandée électroniquement (10, 11) soit disposée dans la conduite d'alimentation en air (4, 5) vers le cylindre de frein (6, 7), pour spécifier la pression de cylindre de frein (p_{BrkCyl}) en fonction de l'une des revendications 1 à 10 précédentes.

12. Dispositif de régulation selon la revendication 11, **caractérisé en ce qu'**un capteur de pression (9) permettant de détecter une pression d'alimentation au niveau de l'électrovanne (10, 11) est prévu.

13. Dispositif de régulation selon la revendication 11 ou 12,
**caractérisé en ce que** l'unité de calcul (8) fait partie du dispositif de régulation (2).

14. Dispositif de régulation selon la revendication 11 ou 12,
**caractérisé en ce que** l'électrovanne pouvant être commandée électroniquement est réalisée comme une valve ABS (10, 11) montée sur une roue de véhicule, laquelle est commandée par un appareil de commande ABS (12).

15. Dispositif de régulation selon les revendications 11 à 14, lequel est réalisé pour réguler la pression de cylindre de frein (p_{BrkCyl}) des deux côtés d'un essieu d'un véhicule.
